(19) **Europäisches Patentamt / European Patent Office / Office européen des brevets**

(11) **EP 4 474 400 A1**

(12) **EUROPEAN PATENT APPLICATION**
published in accordance with Art. 153(4) EPC

(43) Date of publication:
**11.12.2024 Bulletin 2024/50**

(21) Application number: **23749890.2**

(22) Date of filing: **06.02.2023**

(51) International Patent Classification (IPC):
***C08F 220/06*** (2006.01)     ***C08F 2/44*** (2006.01)

(52) Cooperative Patent Classification (CPC):
**C08F 2/44; C08F 220/06**

(86) International application number:
**PCT/JP2023/003776**

(87) International publication number:
**WO 2023/149574 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.02.2022   JP 2022016733**

(71) Applicant: **Nippon Shokubai Co., Ltd.**
**Osaka-shi, Osaka 541-0043 (JP)**

(72) Inventors:
• **TORII, Kazushi**
**Himeji-shi, Hyogo 671-1282 (JP)**

• **KIMURA, Kazuki**
**Himeji-shi, Hyogo 671-1282 (JP)**
• **KOBAYASHI, Nobuhiro**
**Himeji-shi, Hyogo 671-1282 (JP)**
• **TAMAKI, Mariko**
**Himeji-shi, Hyogo 671-1282 (JP)**
• **MATSUI, Daisuke**
**Himeji-shi, Hyogo 671-1282 (JP)**
• **TAJIMA, Shun-ichi**
**Himeji-shi, Hyogo 671-1282 (JP)**

(74) Representative: **Schön, Christoph**
**Dr. Schön, Neymeyr & Partner mbB**
**Bavariaring 26**
**80336 München (DE)**

(54) **POLYMERIZATION METHOD FOR WATER ABSORBENT RESIN**

(57)     Provided is a polymerization method for a water-absorbing resin which can improve polymerization speed without impairing water absorption performance, and an absorbent resin which is produced with use of the polymerization method. An embodiment of the present invention relates to a polymerization method for a water-absorbing resin in which an internal crosslinking agent and an aqueous monomer solution that contains an acrylic acid (salt) are essential and in which polymerization is carried out in the presence of i) a polyacrylic acid (salt)-based polymer and ii) a fibrous material.

**EP 4 474 400 A1**

## Description

Technical Field

The present invention relates to a polymerization method for a water-absorbing resin, and more specifically to a polymerization method for a water-absorbing resin which improves a polymerization speed of the water-absorbing resin and which reduces an amount of residual monomers at the end of polymerization.

Background Art

Water-absorbing resins have an excellent water-absorbing power. With this characteristic, water-absorbing resins are applied to a wide range of applications. For example, water-absorbing resins are applied to sanitary materials such as disposable diapers and sanitary napkins, water retaining agents for soil, and the like. Since such water-absorbing resins are used in a relatively large amount in sanitary materials, water retaining agents for soil, and the like, the water-absorbing resins largely affect cost competitiveness of products in which the water-absorbing resins are used. Accordingly, development of a technique that reduces production cost of water-absorbing resins is desired.

In a case where a water-absorbing resin is produced through aqueous solution polymerization, a lot of energy is required for drying a polymer hydrogel. In light of this, disclosed is a method according to which polymerization of an aqueous solution that contains an acrylic acid or a sodium salt thereof at a high concentration is carried out such that a polymerization starting temperature is set to be high and the polymerization is carried out while water is being vaporized (see Patent Literature 1). Also disclosed is a method for improving productivity by continuous aqueous solution polymerization (see Patent Literatures 2 to 6).

Although the above-described production methods are existing, there is a demand for further improvement in productivity.

Citation List

[Patent Literature]

[Patent Literature 1]
Japanese Patent Application Publication Tokukai No. 2002-212204
[Patent Literature 2]
U.S. Patent No. 4893999
[Patent Literature 3]
U.S. Patent No. 6241928
[Patent Literature 4]
U.S. Patent Application Publication No. 2005/215734 etc.
[Patent Literature 5]
U.S. Patent No. 6987151
[Patent Literature 6]
U.S. Patent No. 6710141

Summary of Invention

Technical Problem

However, in a case where a polymerization concentration is increased and/or a polymerization temperature is increased for further improvement of the productivity (improvement of polymerization speed), an adverse effect on a water absorbent property is found. On this account, there is a limitation on increasing the polymerization concentration and/or increasing the polymerization temperature. Therefore, it is necessary to make improvement of the polymerization speed (improvement of the productivity) by a method that does not rely on such operations.

Solution to Problem

An embodiment of the present invention relates to a polymerization method for a water-absorbing resin, and relates to a polymerization method for a water-absorbing resin in which polymerization is carried out in the presence of an aqueous monomer solution, an internal crosslinking agent, and the following i) and ii):

    i) a polyacrylic acid (salt)-based polymer; and
    ii) a fibrous material.

In other words, an embodiment of the present invention relates to a polymerization method for a water-absorbing resin in which an internal crosslinking agent and an aqueous monomer solution that contains an acrylic acid (salt) are essential and in which polymerization is carried out in the presence of the following i) and ii):

    i) a polyacrylic acid (salt)-based polymer; and
    ii) a fibrous material.

Advantageous Effects of Invention

The polymerization method for a water-absorbing resin according to an embodiment of the present invention can improve the polymerization speed of the water-absorbing resin without relying on conventional operations according to which the polymerization concentration is increased and/or the polymerization temperature is increased. Further, according to the polymerization method of a water-absorbing resin according to an embodiment of the present invention, the water-absorbing property is not impaired, so that the productivity can be improved.

Description of Embodiments

The following descriptions describe the present invention in detail. The present invention is, however, not limited in scope to the descriptions, and may be altered from the examples below and practiced as appropriate, provided that such alteration is not a departure from the scope of the present invention.
Further, the present invention is not limited to embodiments below, but can be variously altered within the scope indicated in Claims. The present invention also encompasses, in its technical scope, any embodiment derived by combining, as appropriate, technical means disclosed in differing embodiments.

<1> Definition of terms

(1-1) "Water-absorbing resin"

The term "water-absorbing resin" as used in an embodiment of the present invention refers to a water-swellable, water-insoluble polymer gelling agent that satisfies the following physical properties. Specifically, the term "water-absorbing resin" refers to a polymer gelling agent that satisfies the following physical properties: centrifuge retention capacity (CRC) defined in ERT 441.2-02 as "water-swelling property" is 5 g/g or more; and extractable (Ext) defined in ERT470.2-02 as "water-insolubility" is 50 mass% or less.
The water-absorbing resin can be designed as appropriate according to its purpose of use, and is not limited to any particular design. The water-absorbing resin is preferably a hydrophilic crosslinked polymer that has been obtained by crosslinking and polymerizing unsaturated monomers having a carboxyl group. The carboxylic acid group is partially neutralized by sodium hydroxide, potassium hydroxide, or the like. The water-absorbing resin is preferably configured to be a hydrophilic crosslinked polymer (polyacrylic acid-based water absorbent resin) that has been obtained by crosslinking and polymerizing an acrylic acid (salt) as an unsaturated monomer. The water-absorbing resin is not limited to a form in which the water-absorbing resin is wholly (that is, 100 mass%) a polymer, and can be a water-absorbing resin composition containing an additive and the like within a range in which the above-described physical properties (CRC and Ext) are satisfied.
The term "water-absorbing resin" as used in an embodiment of the present invention may refer to not only an end product but also an intermediate produced during a process of producing the water-absorbing resin. In addition, the water-absorbing resin and the water-absorbing resin composition described above will also be collectively referred to as "water-absorbing resin". Examples of the intermediate include a crosslinked hydrogel polymer after polymerization, a dried polymer after drying, and a water-absorbing resin powder before surface crosslinking. Examples of forms of the water-absorbing resin encompass a sheet form, a fiber form, a film form, a particulate form, and a gel form. The water-absorbing resin of an embodiment of the present invention is preferably a particulate water-absorbing resin.

(1-2) "Polyacrylic acid (salt)-based polymer"

The term "polyacrylic acid (salt)-based polymer" in an embodiment of the present invention is a polymer obtained by polymerizing a polyacrylic acid (salt)-based monomer as a main component. The "polyacrylic acid (salt)-based polymer" may contain an internal crosslinking agent as another component. Examples of a property/state of the "polyacrylic acid (salt)-based polymer" include: a water-soluble aqueous solution state; a water-swellable, water-insoluble swollen gel state; a swollen gel solution state in which the aforesaid states are mixed; and a dried powder state.

(1-3) "Polyacrylic acid (salt)"

The term "polyacrylic acid (salt)" as used in an embodiment of the present invention refers to polyacrylic acid and/or a salt thereof. The term "polyacrylic acid (salt)" also refers to a polymer that contains, as a main component, a repeating unit of acrylic acid and/or a salt thereof (hereinafter referred to as "acrylic acid (salt)") and that contains a graft component as an optional component. The term "main component" means that the acrylic acid (salt) is used (contained) normally in an amount of 50 mol% to 100 mol%, preferably of 70 mol% to 100 mol%, of 80 mol% to 100 mol%, more preferably of 90 mol% to 100 mol%, and even more preferably of substantially 100 mol%, relative to the total amount of monomers for use in polymerization (excluding the internal crosslinking agent). In other words, the term "polyacrylic acid (salt)" has a structural unit derived from the acrylic acid (salt) in an amount of 50 mol% to 100 mol%, preferably of 70 mol% to 100 mol%, of 80 mol% to 100 mol%, more preferably of 90 mol% to 100 mol%, and even more preferably of substantially 100 mol%, relative to the total amount of structural units of the polymer.

(1-4) "Induction period until start of polymerization"

The term "induction period until start polymerization" refers to a time period in production of a water-absorbing resin from when an aqueous monomer solution etc. and an aqueous initiator solution are mixed with each other until when polymerization is started. The start of the polymerization can be confirmed, for example, by occurrence of solution expansion and bubbling, occurrence of a white turbidity in the solution, and/or a large increase in the temperature of the aqueous monomer solution. It is considered that a shorter "induction period until start of polymerization" leads to a faster polymerization speed.

(1-5) "Amount of residual monomers"

The term "amount of residual monomers" refers to an amount of monomers which are dissolved in an aqueous solution, relative to a polymer solid content in a polymer.

(1-6) "Fibrous material"

The term "fibrous material" in an embodiment of the present invention refers to a material which has a shape whose length is 2 or more times longer than a thickness (width). With this feature of the shape, the "fibrous material" often has a larger specific surface area than a particulate material when the particulate material has the same weight as the fibrous material. Note that the fibrous material used in an embodiment of the present invention can be any of polymers that are hydrophilic, hydrophobic, natural and/or synthetic.

(1-7) "EDANA" and "ERT"

"EDANA" is an acronym of the European Disposables and Nonwovens Association. "ERT" is an acronym of EDANA Recommended Test Methods, which are European standard (de facto international standard) measuring methods for water-absorbing resins. In the present specification, physical properties of the water-absorbing resin are measured in conformity with the ERT master copy (2002 revised version; known literature) unless otherwise specified.

(1-8) "CRC" (ERT441.2-02)

The term "CRC" is an acronym for "centrifuge retention capacity", and means a fluid retention capacity without pressure (hereinafter referred to also as "fluid retention capacity") of a water-absorbing resin. Specifically, the CRC refers to a fluid retention capacity (unit: g/g) measured after 0.2 g of a water-absorbing resin contained in a nonwoven fabric bag is immersed in a large excess of 0.9 mass% of aqueous sodium chloride solution for 30 minutes so as to be allowed to freely swell and then the water-absorbing resin is drained in a centrifuge (250 G).

(1-9) "AAP" (ERT442.2-02)

The term "AAP" is an acronym for "absorption against pressure" and refers to a fluid retention capacity under pressure of a water-absorbing resin. Specifically, the AAP refers to a fluid retention capacity (unit: g/g) measured after 0.9 g of a water-absorbing resin is allowed to swell in a large excess of 0.9 mass% of aqueous sodium chloride solution for one hour under a load of 2.06 kPa (equivalent to 21 g/cm2, 0.3 psi).

(1-10) Others

In the present specification, any range of "X to Y" denotes "X or more and Y or less".

In the present specification, "ppm" means "ppm by weight", unless otherwise specifically noted.

In the present specification, "... acid (salt)" means "... acid and/or a salt(s) thereof". "(meth)acrylic" means "acrylic and/or methacrylic".

In the present specification, a unit "liter" of a volume may be denoted as "1" or "L".

In the present specification, the following pairs of words are used as synonyms: "weight" and "mass"; "weight%" and "mass%"; and "parts by weight" and "parts by mass".

<2> Polymerization method for water-absorbing resin

The following description will discuss polymerization steps (2-1) and (2-2) for a water-absorbing resin according to an embodiment of the present invention.

(2-1) Aqueous monomer solution preparation step

This step is a step of preparing an aqueous solution (hereinafter, referred to as "aqueous monomer solution") which contains an acrylic acid (salt) as a main component. Note that a monomer slurry liquid can be used within a range in which the water absorption performance of a water-absorbing resin to be obtained does not deteriorate. However, for convenience, this section discusses the aqueous monomer solution.

Further, the above "main component" means, as described in the above (1-3), that the amount (content) of the acrylic acid (salt) used is ordinarily 50 mol% or more, preferably 70 mol% or more, 80 mol% or more, and more preferably 90 mol% or more (upper limit is 100 mol%) relative to the total amount of monomers (excluding an internal crosslinking agent) which are subjected to a polymerization reaction of the water-absorbing resin.

(Acrylic acid)

In an embodiment of the present invention, from the viewpoint of physical properties and productivity of a water-absorbing resin to be obtained, the acrylic acid and/or a salt thereof (hereinafter, referred to as "acrylic acid (salt)") is used as a monomer.

The "acrylic acid" may be a well-known acrylic acid, and may contain, as a polymerization inhibitor, preferably a methoxyphenol, and more preferably p-methoxyphenol. From the viewpoint of polymerizability of the acrylic acid and color of the water-absorbing resin, the polymerization inhibitor should be contained in an amount of preferably 200 ppm or less, more preferably 10 ppm to 160 ppm, and even more preferably 20 ppm to 100 ppm. Further, as an impurity in the acrylic acid, the compound disclosed in U.S. Patent Application Publication No. 2008/0161512 is also applicable to an embodiment of the present invention.

The "acrylic acid salt" is produced by neutralizing the above acrylic acid with a basic composition below. The acrylic acid salt may be a commercially available acrylic acid salt (for example, sodium acrylate) or may be produced by neutralizing an acrylic acid in a plant for producing a water-absorbing resin.

(Basic composition)

In an embodiment of the present invention, the term "basic composition" refers to a composition which contains a basic compound. The "basic composition" is, for example, a commercially available aqueous sodium hydroxide solution.

Specific examples of the basic compound include a carbonate salt and/or a hydrocarbon salt of an alkali metal, a hydroxide of an alkali metal, ammonia, and an organic amine. Among these compounds, the basic compound is preferably a strongly basic compound from the viewpoint of physical properties of a water-absorbing resin to be obtained. In other words, the basic compound is preferably a hydroxide of an alkali metal such as sodium hydroxide, potassium hydroxide, and lithium hydroxide, and more preferably, sodium hydroxide.

(N eu tralization)

As neutralization in an embodiment of the present invention, it is possible to select one or use a combination of both of the following: neutralization (before polymerization) of an acrylic acid; and neutralization (after polymerization) of a crosslinked hydrogel polymer which is obtained by crosslinking the acrylic acid (hereinafter, referred to as "post-neutralization"). In a case where the above "polyacrylic acid (salt)-based polymer" is used in production of the water-absorbing resin, it can be considered that the polymer contains a basic compound. This basic compound neutralizes the acrylic acid before polymerization or the crosslinked hydrogel polymer after polymerization. Therefore, as described later, respective neutralization rates of the acrylic acid and of the water-absorbing resin as an end product are each adjusted to be within a predetermined range in consideration of the basic compound. Further, although the neutralization can be of a continuous type or a batch type and is not particularly limited, neutralization of a continuous type is preferable from the viewpoint of production efficiency or the like. Note that for conditions such as a neutralizing device, a neutralizing temperature, and a retention time, the conditions described in International Publication No. WO 2009/123197, U.S. Patent Application Publication No. 2008/0194863, and the like are applicable to an embodiment of the present invention.

The neutralization rate in an embodiment of the present invention is preferably 10 mol% to 90 mol%, more preferably 40 mol% to 85 mol%, even more preferably 50 mol% to 80 mol%, and particularly preferably 60 mol% to 75 mol% relative to an acid group(s) of a monomer(s). In a case where the neutralization rate is less than 10 mol%, the fluid retention capacity may be significantly decreased. On the other hand, in a case where the neutralization rate is more than 90 mol%, a water-absorbing resin which has a high fluid retention capacity under pressure may not be obtained. Note that for example, a neutralization rate of 75 mol% means a mixture of 25 mol% of acrylic acid and 75 mol% of an acrylic acid salt. Further, the mixture may also be referred to as a partially neutralized acrylic acid product. The above neutralization rate also applies to the case of post-neutralization. Further, the above neutralization rate is also applied to the neutralization rate of the water-absorbing resin as an end product. An embodiment of the present invention is characterized by using the above-described "polyacrylic acid (salt)-based polymer" in production of a water-absorbing resin. In a case where the polyacrylic acid (salt)-based polymer contains the basic compound described above, the neutralization (before polymerization) of the acrylic acid and/or the post-neutralization of the crosslinked hydrogel polymer is adjusted as appropriate so that the neutralization rate of the water-absorbing resin as an end product falls in a predetermined range, in consideration of the basic compound.

(Other monomer(s))

In an embodiment of the present invention, the term "other monomer(s)" refers to a monomer excluding the above acrylic acid (salt). It is possible to produce a water-absorbing resin by using the "other monomer(s)" in combination with the acrylic acid (salt). Examples of the other monomer(s) described above include a water-soluble or hydrophobic unsaturated monomer. Specifically, the compound (except acrylic acid) disclosed in U.S. Patent Application Publication No. 2005/0215734 is also applicable to an embodiment of the present invention.

(Internal crosslinking agent)

As the internal crosslinking agent used in an embodiment of the present invention, the compounds disclosed in U.S. Patent No. 6241928 are also applicable to an embodiment of the present invention. From among these compounds, one kind or two or more kinds of compounds are selected in consideration of reactivity. Further, from the viewpoint of water absorption performance and the like of a water-absorbing resin to be obtained, a compound which has two or more polymerizable unsaturated groups is preferable as the internal crosslinking agent. The internal crosslinking agent used is more preferably a compound which has a pyrolytic property at a drying temperature in a drying step described below, and even more preferably a compound which includes two or more polymerizable unsaturated groups and which has a (poly) alkylene glycol structural unit.

The polymerizable unsaturated groups are each preferably an allyl group or a (meth)acrylate group, and more preferably a (meth)acrylate group. Further, preferably, polyethylene glycol is used as the above-described (poly)alkylene glycol structural unit, and the number n of structural units is preferably 1 to 100, and more preferably 6 to 50.

The amount of the internal crosslinking agent used is preferably 0.0001 mol% to 10 mol% and more preferably 0.001 mol% to 1 mol% relative to the total amount of monomers. It is possible to obtain a desired water-absorbing resin by setting the amount of the internal crosslinking agent used within the above range. Note that an excessively small amount of the internal crosslinking agent used results in a decreased gel strength and tends to consequently increase a water-soluble content whereas an excessively large amount of the internal crosslinking agent tends to result in a decreased fluid retention capacity, and thus the excessively small amount and the excessively large amount are not preferable. Note that the mol% relative to the total amount of monomers is a percentage of the number of moles of the internal crosslinking agent relative to the total number of moles of monomers contained in the aqueous monomer solution.

In an embodiment of the present invention, the following method is preferably applied: a method in which a predetermined amount of the internal crosslinking agent is added to an aqueous monomer solution in advance and a crosslinking reaction is carried out simultaneously with polymerization. In addition to the above method, it is possible to employ, for example, a method in which the internal crosslinking agent is added during and/or after the polymerization so that post-crosslinking is carried out; a method in which radical crosslinking is carried out with use of a radical polymerization initiator; and/or a method in which radiation crosslinking is carried out with use of an active energy ray such as an electron ray or an ultraviolet ray. Further, it is possible to use two or more of the above methods in combination.

(Mixture of polyacrylic acid (salt)-based polymer and fibrous material)

In an embodiment of the present invention, from the viewpoint of improving the polymerization speed of the water-absorbing resin, a "mixture of a polyacrylic acid (salt)-based polymer and a fibrous material" is added. The polymerization method for a water-absorbing resin according to an embodiment of the present invention can improve the polymerization speed of the water-absorbing resin without an adverse effect on a water absorbent property and improve the productivity. Further, as an unexpected additional effect, the amount of residual monomers contained in the hydrogel after polymerization can be reduced.

The "polyacrylic acid (salt)-based polymer" in accordance with an embodiment of the present invention is as described in the above (1-2). It is inferred that the "polyacrylic acid (salt)-based polymer" in accordance with an embodiment of the present invention acts to improve a dispersion state of the "fibrous material" described below in the aqueous monomer solution.

The "polyacrylic acid (salt)-based polymer" is used in an amount of 1 part by mass to 150 parts by mass, preferably 2 parts by mass to 100 parts by mass, more preferably 3 parts by mass to 75 parts by mass, and even more preferably 5 parts by mass to 50 parts by mass, relative to 100 parts by mass of monomers constituting the water-absorbing resin. An excessively small amount of the polyacrylic acid (salt)-based polymer used may lead to a decrease in dispersibility of the fibrous material, whereas an excessively large amount of the polyacrylic acid (salt)-based polymer used may result in deterioration of the water absorbent property of the water-absorbing resin.

In a case where the "polyacrylic acid (salt)-based polymer" used is a non-crosslinked-type polymer, a weight average molecular weight is preferably 1 to 1,000,000, more preferably 2 to 800,000, and even more preferably 3 to 600,000. In a case where the molecular weight is too low, the water absorbent property of the water-absorbing resin deteriorates. On the other hand, in a case where the molecular weight is too high, viscosity of the aqueous monomer solution is increased, and handleability is impaired. It is referable that the "polyacrylic acid (salt)-based polymer" be a non-crosslinked polymer and be a water-soluble polymer.

In an embodiment of the present invention, it is possible to use, as the " fibrous material", for example, fibers of wood pulp such as mechanical pulp, chemical pulp, semi-chemical pulp, or dissolved pulp, or fibers of artificial cellulose such as rayon or acetate. It is also possible to use any of fibers of synthetic polymers such as polyolefins, polyesters, polyacrylonitriles, and nylons. Further, it is also possible to use a mixture of a plurality of fiber types described above.

The "fibrous material" in accordance with an embodiment of the present invention uses fibers having a fiber length of 1 $\mu$m to 1000 $\mu$m, preferably in an amount of 0.01 parts by mass to 25 parts by mass relative to 100 parts by mass of monomers. The fiber length is preferably 5 $\mu$m to 900 $\mu$m, and more preferably 10 $\mu$m to 800 $\mu$m. An excessively long fiber length may reduce the effect of improving the polymerization speed, whereas an excessively short fiber length may reduce the dispersibility of the fibrous material.

The amount of the fibers having a fiber length of 1 $\mu$m to 1000 $\mu$m used relative to 100 parts by mass of monomers is preferably 0.05 parts by mass to 20 parts by mass, and more preferably 0.1 parts by mass to 15 parts by mass. For improvement of the polymerization speed, the amount of such fibers used is preferably 0.01 masses or more, and for maintaining the water absorbent property of the water-absorbing resin, the amount of the fibers used may be 25 parts by mass or less.

Further, unless the effect of the present embodiment (the present invention) is not hindered, fibers having a fiber length of less than 1 $\mu$m and/or a fiber length of more than 1000 $\mu$m may be contained.

Although, an action of the "fibrous material" in accordance with an embodiment of the present invention is unknown, the "fibrous material" is inferred to act to, for example, suppress a termination reaction of the polymerization radial and consequently to improve the polymerization speed by increasing the viscosity of a polymerization system, causing some interaction between the fibrous material and a polymerization radical, and/or the like.

The "polyacrylic acid (salt) polymer" and the "fibrous material" are used in an amount at a mass ratio of 99.9 to 80/0.1 to 20, preferably of 99.8 to 90/0.2 to 10, and more preferably of 99.5 to 95/0.5 to 5, from the viewpoint of the dispersibility of the fibrous material.

A method of mixing the "polyacrylic acid (salt)-based polymer" and the "fibrous material" may be a method in which after the "polyacrylic acid (salt)-based polymer" and the "fibrous material" are mixed with each other, a resultant mixture is added to an aqueous monomer solution. Alternatively, it is possible to employ a method in which the "polyacrylic acid (salt) polymer" and the "fibrous material" are separately added to an aqueous monomer solution and then mixed with each other. Alternatively, it is possible to employ a method in which a material in a state in which the "polyacrylic acid (salt)-based polymer" and the "fibrous material" are mixed together may be added to an aqueous monomer solution.

Examples of the material in a state in which the "polyacrylic acid (salt)-based polymer" and the "fibrous material" are mixed together include: a mixture of pulp and a recycled water-absorbing resin collected from a used absorbent article; a mixture of pulp and a water-absorbing resin having a recovered water-absorbing property; and a mixture of pulp and a material whose handleability is improved by reducing the molecular weight of the water-absorbing resin. The "water-absorbing resin having a recovered water-absorbing property" refers to a water-absorbing resin which is obtained by subjecting a mixture of pulp and the recycled water-absorbing resin to a treatment. The "treatment" is, for example, a regeneration treatment in which a water-absorbing resin in a state where the water-absorbing performance is low is regenerated to be in a state where the water absorption performance is high.

In other words, the "recycled water-absorbing resin" refers a resin that is obtained by returning, to a usable condition for water-absorbing purposes, a water-absorbing resin which has been taken out from a used water absorbent article and which has ordinarily been discarded, thermally recycled as fuel, composted, or the like. In other words, the "recycled water-absorbing resin" refers to a water-absorbing resin that has absorption performance recovered and that can be used for water-absorbing purposes.

Further, the mixture of the "polyacrylic acid (salt) polymer" and the "fibrous material" is not necessarily added in an aqueous monomer solution preparation step, but can be added during polymerization or both in the aqueous monomer solution preparation step and during the polymerization.

(Other substance(s) added to aqueous monomer solution)

In an embodiment of the present invention, substances described below can also be added during preparation of the aqueous monomer solution from the viewpoint of improvement of physical properties of a water-absorbing resin to be obtained. Specifically, it is possible to add, for example: a hydrophilic polymer(s) such as starch and/or a starch derivative, in an amount of preferably 50 mass% or less, more preferably 20 mass% or less, even more preferably 10 mass% or less, and particularly preferably 5 mass% or less (lower limit is 0 mass%); and a blowing agent(s) such as a carbonate and/or an azo compound, a surfactant, a chelating agent, a chain transfer agent, and/or the like, in an amount of preferably 5 mass% or less, more preferably 1 mass% or less, and even more preferably 0.5 mass% or less (lower limit is 0 mass%). The above substances are not necessarily added to the aqueous monomer solution, but can be added during the polymerization, or can be added both to the aqueous monomer solution and during the polymerization.

(Monomer component concentration)

In the present step, in preparing an aqueous monomer solution, the above-described substances are added. The aqueous monomer solution may contain a monomer component at any concentration. The concentration is, however, preferably 10 mass% to 80 mass%, more preferably 20 mass% to 75 mass%, even more preferably 30 mass% to 70 mass%, from the viewpoint of physical properties of a water-absorbing resin to be produced. In addition, in a case where aqueous solution polymerization or reversed phase suspension polymerization is employed, a solvent other than water can be used in combination according to need. In such a case, the type of the solvent used is not limited to any particular one.

Note that the "monomer component concentration" is a value obtained by Formula (1) below. The mass of the aqueous monomer solution does not include the mass of a graft component, a water-absorbing resin, a hydrophobic solvent used in reversed phase suspension polymerization, and the like.

$$\text{(Concentration (mass\%) of monomer component)} = \text{(mass of monomer component)}/\text{(mass of aqueous monomer solution)} \times 100 \qquad (1)$$

(2-2) Polymerization step

This step is a step of polymerizing an acrylic acid (salt)-based aqueous monomer solution obtained in the aqueous monomer solution preparation step, so that a crosslinked hydrogel polymer (hereinafter referred to as "hydrogel") is obtained.

(Polymerization initiator)

The polymerization initiator used in an embodiment of the present invention is not particularly limited since the polymerization initiator is selected as appropriate in accordance with the form of polymerization, or the like. Examples of the polymerization initiator include a pyrolysis-type polymerization initiator, a photolysis-type polymerization initiator, and a redox-type polymerization initiator which is used in combination with a reducing agent that facilitates decomposition of the pyrolysis-type polymerization initiator and the photolytic-type polymerization initiator. Specifically, one or more of the polymerization initiators disclosed in U.S. Patent No. 7265190 can be used as the polymerization initiator. Note that from the viewpoint of the handleability of the polymerization initiator and/or the physical properties of the water-absorbing resin, the polymerization initiator is preferably a peroxide or an azo compound, more preferably a peroxide, and even more preferably a persulfate.

The amount of the polymerization initiator used is preferably 0.001 mol% to 1 mol% and more preferably 0.001 mol% to 0.5 mol% relative to the monomer(s). Further, the amount of the reducing agent used is preferably 0.0001 mol% to 0.02 mol% relative to the monomer(s). Note that in place of the above polymerization initiator, the polymerization reaction may be carried out by irradiation with an active energy ray such as a radial ray, an electron beam, or an ultraviolet ray, or the polymerization initiator may be used in combination with any of these active energy rays. Note that the mol% relative to the monomer(s) is a percentage of the number of moles of the reducing agent relative to the total number of moles of monomers contained in the aqueous monomer solution.

(Mixture of polyacrylic acid (salt)-based polymer and fibrous material)

As described in the above "(2-1) Aqueous monomer solution preparation step", the "mixture of polyacrylic acid (salt)-based polymer and fibrous material" may be added in advance in the aqueous monomer solution preparation step or added separately from the aqueous monomer solution in the polymerization step.

(Form of polymerization)

The form of polymerization which is applied to an embodiment of the present invention is not particularly limited. From the viewpoint of the water absorbent property, easy control of polymerization, and the like, preferable examples of the form of polymerization include spray droplet polymerization, aqueous solution polymerization, and reversed phase suspension polymerization, more preferable examples of the form of polymerization include aqueous solution polymerization and reverse phase suspension polymerization, and even more preferable examples of the form of polymerization include aqueous solution polymerization. Among others, continuous aqueous solution polymerization is particularly preferable, and can be any one of continuous belt polymerization and continuous kneader polymerization.

As specific forms of polymerization, the continuous belt polymerization is disclosed in, for example, U.S. Patent Nos. 4893999 and 6241928, and U.S. Patent Application Publication No. 2005/215734, and the continuous kneader polymerization is disclosed in, for example, U.S. Patent Nos. 6987151 and 6710141. By employing these forms of continuous aqueous solution polymerization, it is possible to improve efficiency of production of the water-absorbing resin.

Further, preferable examples of the form of the continuous aqueous solution polymerization include "high-temperature initiated polymerization" and "high-concentration polymerization". The term "high-temperature initiated polymerization" refers to a form in which the temperature of an aqueous monomer solution is set to preferably 30°C or more, more preferably 35°C or more, even more preferably 40°C or more, and particularly preferably 50°C or more (upper limit is the boiling point) when the polymerization is started. The "high-concentration polymerization" refers to a form of polymerization in which polymerization is carried out while a monomer concentration is set to preferably 30 mass% or more, more preferably 35 mass% or more, even more preferably 40 mass% or more, and particularly preferably 45 mass% or more (upper limit is a saturated concentration). It is possible to use these forms of polymerization in combination.

In an embodiment of the present invention, polymerization can be carried out in an air atmosphere. From the viewpoint of color of a water-absorbing resin to be obtained, polymerization is carried out preferably in an atmosphere of inert gas such as nitrogen or argon. In such a case, an oxygen concentration is preferably controlled to be, for example, 1 volume% or less. Note that it is preferable to also replace dissolved oxygen in an aqueous monomer solution with inert gas (e.g., dissolved oxygen: less than 1 mg/l).

Alternatively, in an embodiment of the present invention, the polymerization can be foaming polymerization in which polymerization is carried out while gas bubbles (particularly the inert gas or the like) are dispersed into an aqueous monomer solution.

In an embodiment of the present invention, it is possible to increase solid content concentration during polymerization. A degree of increase in solid content, as an index of an increase in such a solid content concentration, is defined by Formula (2) below. Note that the degree of increase in solid content concentration is preferably 1 mass% or more, more preferably 2 mass% or more.

(Degree of increase in solid content (mass%)) = (solid content concentration in hydrogel after polymerization (mass%)) - (solid content concentration in aqueous monomer solution (mass%))   (2),

where the solid content concentration in an aqueous monomer solution is a value obtained by Formula (3) below in which components in a polymerization system are an aqueous monomer solution, a graft component, a water-absorbing resin and other solid substances (e.g., water-insoluble fine particles and the like) and therefore exclude a hydrophobic solvent in reversed phase suspension polymerization.

$$\text{(Solid content in aqueous monomer solution (mass\%))} = \{\text{mass of (monomer component + graft component + water-absorbing resin + other solid substances)}\} / \text{(mass of components in polymerization system)} \times 100 \quad (3)$$

(3) Method for producing water-absorbing resin (steps subsequent to polymerization step)

The following will discuss a method for producing a water-absorbing resin in accordance with an embodiment of the present invention (steps subsequent to polymerization step).

(3-1) Gel-crushing step

This step is a step of gel-crushing a hydrogel, which has been obtained by the polymerization step, with use of, for example, a kneader, a screw extruder such as a meat chopper, or a gel-crusher such as a cutter mill in order to obtain a hydrogel in a particulate form (hereinafter referred to as "particulate hydrogel"). Note that in a case where the polymerization step is carried out through kneader polymerization, the polymerization step and the gel-crushing step are carried out simultaneously. Further, in a case where the particulate hydrogel is directly obtained through a polymerization process, such as vapor phase polymerization or reversed phase suspension polymerization, the gel-crushing step may not be carried out. With regard to gel-crushing conditions and forms other than above described, any of conditions and forms disclosed in International Publication No. WO 2011/126079 can be preferably employed in an embodiment of the present invention.

(3-2) Drying step

This step is a step of drying the particulate hydrogel, which has been obtained by the polymerization step and/or the gel-crushing step, until a desired resin solid content is attained, and thus obtaining a dried polymer. The resin solid content is calculated from drying loss (a change in mass after heating 1 g of the water-absorbing resin at 180°C for three hours). The resin solid content is preferably 80 mass% or more, more preferably in a range of 85 mass% to 99 mass%, even more preferably in a range of 90 mass% to 98 mass%, and especially even more preferably in a range of 92 mass% to 97 mass%.

A drying method of drying the particulate hydrogel is not particularly limited. Examples of the drying method include thermal drying, hot air drying, drying under reduced pressure, fluidized bed drying, infrared drying, microwave drying, drum dryer drying, drying by azeotropic dehydration with a hydrophobic organic solvent, and high humidity drying by use of high temperature water vapor. The drying method is, among others, preferably hot air drying, more preferably band drying, in which hot air drying is performed on a through-flow belt, from the viewpoint of drying efficiency.

From the viewpoint of, for example, the color of a water-absorbing resin to be produced and drying efficiency, the hot air drying is performed at a drying temperature (temperature of hot air) of preferably 120°C to 250°C, more preferably 150°C to 200°C. Note that drying conditions other than the drying temperature (e.g., the air velocity of hot air and the drying time) can be set as appropriate in accordance with moisture content of the particulate hydrogel to be dried, total mass of the particulate hydrogel to be dried, and a desired resin solid content. When band drying is carried out, the various conditions disclosed in, for example, International Publication Nos. WO 2006/100300, WO 2011/025012, WO 2011/025013, and WO 2011/111657 can be applied as necessary.

(3-3) Pulverizing step and classification step

These steps are steps of pulverizing (pulverizing step) the dried polymer obtained in the drying step and adjusting (classification step) the particle size of a resulting pulverized polymer to a particle size within a certain range so that a water-absorbing resin powder is obtained (for convenience, water-absorbing resin in a powder form before being subjected to surface crosslinking is referred to as "water-absorbing resin powder").

An apparatus used in the pulverizing step of an embodiment of the present invention can be, for example, a high-speed rotation pulverizer such as a roll mill, a hammer mill, a screw mill, or a pin mill; a vibrating mill; a knuckle-type pulverizer; a cylindrical mixer; or the like. These apparatuses can be used in combination according to need. A particle size adjusting method in the classification step of an embodiment of the present invention is not limited to a particular one and can be, for example, sieve classification with use of one or more JIS standard sieves (JIS Z8801-1 (2000)), airflow classification, or the like. Note that the particle size of water-absorbing resin is not necessarily adjusted during the pulverizing step or classification step, but may alternatively be adjusted as appropriate during the polymerization step (in particular, in reversed phase suspension polymerization or spray droplet polymerization) or some other step (for example, a granulation step or a fine powder recycling step).

The water-absorbing resin powder obtained in an embodiment of the present invention has a weight average particle diameter (D50) of preferably 200 $\mu$m to 600 $\mu$m, more preferably 200 $\mu$m to 550 $\mu$m, even more preferably 250 $\mu$m to 500 $\mu$m, particularly preferably 350 $\mu$m to 450 $\mu$m. The water-absorbing resin powder contains particles with a particle diameter (D50) of less than 150 $\mu$m at a proportion of preferably 10 mass% or less, more preferably 5 mass% or less, and even more preferably 1 mass% or less. The water-absorbing resin powder contains particles with a particle diameter (D50) of 850 $\mu$m or more at a proportion of preferably 5 mass% or less, more preferably 3 mass% or less, and even more preferably 1 mass% or less. The proportions of the above particles each preferably have a lower limit as low as possible in any case, desirably 0 mass%, acceptably approximately 0.1 mass%. Note that these particle sizes are measured with use of standard sieves in conformity with a measuring method disclosed in U.S. Patent No. 7638570 and a measuring method disclosed in EDANA ERT 420.2-02.

The above particle sizes apply not only to the water-absorbing resin after surface crosslinking (for convenience, hereinafter referred to also as "water-absorbing resin particle(s)"), but also to the water-absorbing resin as an end product. Therefore, it is preferable to subject the water-absorbing resin particles to surface-crosslinking treatment (surface-crosslinking step) such that the particle size is maintained within the above described range, and it is more preferable to carry out particle size adjustment by carrying out a sizing step subsequent to the surface-crosslinking step.

(3-4) Surface-crosslinking step

This step is a step of forming a portion with a higher crosslinking density in a surface layer (that is, a portion of water-absorbing resin powder which is up to several tens of micrometers deep from the surface) of the water-absorbing resin powder produced through the above steps. This step includes a mixing step, a heat treatment step, and (optionally) a cooling step.

In the surface-crosslinking step, a water-absorbing resin (water-absorbing resin particles) can be obtained which has been surface-crosslinked by radical crosslinking, surface polymerization, crosslinking reaction with a surface-crosslinking agent, or the like on the surface of the water-absorbing resin powder.

(Surface-crosslinking agent)

A surface-crosslinking agent used in an embodiment of the present invention is not limited to any particular one. Examples of the surface-crosslinking agent include an organic surface-crosslinking agent and an inorganic surface-crosslinking agent. Among others, an organic surface-crosslinking agent that is reactive with a carboxyl group is preferable, from the viewpoint of, for example, the physical properties of a water-absorbing resin and the handleability of the surface-crosslinking agent. For example, one of the surface-crosslinking agents disclosed in U.S. Patent No. 7183456 can be used, or two or more of the surface-crosslinking agents disclosed in U.S. Patent No. 7183456 can be used. Specifically, examples of the surface-crosslinking agent encompass a polyhydric alcohol compound, an epoxy compound, a haloepoxy compound, a polyamine compound, a condensed product with a haloepoxy compound of the polyamine compound, an oxazoline compound, an oxazolidinone compound, a polyvalent metal salt, an alkylene carbonate compound, a cyclic urea compound, and the like.

An amount of the surface-crosslinking agent used (or a total amount used in a case where a plurality of surface-crosslinking agents are used) is preferably 0.01 parts by weight to 10 parts by weight, more preferably 0.01 parts by weight to 5 parts by weight, relative to 100 parts by weight of the water-absorbing resin powder. The surface-crosslinking agent is preferably added as an aqueous solution. In such a case, an amount of water used is preferably 0.1 parts by weight to 20 parts by weight, and more preferably 0.5 parts by weight to 10 parts by weight, relative to 100 parts by weight of the water-absorbing resin powder. In a case where a hydrophilic organic solvent is used according to need, an amount of the hydrophilic organic solvent used is preferably 10 parts by weight or less, and more preferably 5 parts by weight or less, relative to 100 parts by weight of the water-absorbing resin powder.

It is possible, for example, to mix additives, which are added in a "remoistening step" described below, with the surface-crosslinking agent (aqueous solution) by adding each of the additives in a range of 5 parts by weight or less, or alternatively, to add the additives separately from the surface-crosslinking agent in the mixing step described below.

(Mixing step)

This step is a step of mixing the water-absorbing resin powder and the surface-crosslinking agent. A method of mixing the surface-crosslinking agent is not limited to a particular one. The method can be, for example, a method in which a surface-crosslinking agent solution is prepared in advance, and the surface-crosslinking agent solution is mixed with the water-absorbing resin powder preferably by spraying or dropping the surface-crosslinking agent solution onto the water-absorbing resin powder, more preferably by spraying the surface-crosslinking agent solution onto the water-absorbing resin powder.

The above mixing may be performed with use of any device. The device is preferably a high-speed stirring mixer, more preferably a high-speed stirring continuous mixer.

(Heat treatment step)

This step is a step of heating a mixture, which has been discharged in the mixing step, so as to cause crosslinking reaction on a surface of the water-absorbing resin powder.

A device for performing the crosslinking reaction is not limited to any particular one, and can be preferably a paddle dryer. A reaction temperature in the crosslinking reaction is set as appropriate according to a type of the surface-crosslinking agent used, and is preferably 50°C to 300°C and more preferably 100°C to 200°C.

(Cooling step)

This step is an optional step which is provided after the heat treatment step if needed. A device for carrying out the cooling is not limited to a particular one and is preferably a device whose specification is identical with that of a device used in the heat treatment step, and more preferably a paddle dryer. This is because such a device can be used as a cooling device by replacing a heating medium with a refrigerant. Note that, according to need, the water-absorbing resin particles obtained in the heat treatment step are forced to cool in the cooling step to a temperature preferably of 40°C to 80°C, and more preferably of 50°C to 70°C.

(3-5) Remoistening step

This step is a step of adding, to the water-absorbing resin particles obtained in the surface-crosslinking step, at least one additive selected from the group consisting of polyvalent metal salt compounds, cationic polymers, chelating agents, inorganic reducing agents, and α-hydroxycarboxylic acid compounds which will be described below.

Note that since the additive is added in the form of aqueous solution or slurry liquid, the water-absorbing resin particles are swollen with water again. Therefore, this step is referred to as "remoistening step". Further, as described above, the additive can be mixed with the water-absorbing resin powder simultaneously with the surface-crosslinking agent (aqueous solution).

(Polyvalent metal salt and/or cationic polymer)

In an embodiment of the present invention, a polyvalent metal salt and/or a cationic polymer is/are preferably added, from the viewpoint of improvement in water absorption speed, liquid permeability, moisture absorption flowability, and the like of the water-absorbing resin to be obtained.

As the polyvalent metal salt and/or the cationic polymer, specifically, any of compounds and any of amounts used thereof disclosed in "(7) Polyvalent metal salt and/or cationic polymer" of International Publication No. WO 2011/040530 can be applied to an embodiment of the present invention.

(Chelating agent)

In an embodiment of the present invention, a chelating agent is preferably added from the viewpoint of, for example, color of the water-absorbing resin to be obtained (coloration prevention) and deterioration prevention of the water-absorbing agent to be obtained. As the chelating agent, specifically, any of compounds and any of amounts used thereof disclosed in "(2) Chelating agent" of International Publication No. WO 2011/040530 can be applied to an embodiment of the present invention.

(Inorganic reducing agent)

In an embodiment of the present invention, an inorganic reducing agent is preferably added from the viewpoint of, for example, color (coloration prevention), deterioration prevention, and reduction in residual monomers in the water-absorbing resin to be obtained.

Specifically, as the inorganic reducing agent, any of compounds and any of amounts used thereof disclosed in "(3) Inorganic reducing agent" of International Publication No. WO 2011/040530 can be applied an embodiment of the present invention.

(α-hydroxycarboxylic acid compound)

In an embodiment of the present invention, an α-hydroxycarboxylic acid is preferably added from the viewpoint of, for example, color (coloration prevention) of the water-absorbing resin to be obtained. Note that the "α-hydroxycarboxylic acid compound" is a carboxylic acid having a hydroxyl group in a molecule or is a salt thereof, and is a hydroxycarboxylic acid having a hydroxyl group at an alpha position.

Specifically, as the α-hydroxycarboxylic acid compound, any of compounds and any of amounts used thereof disclosed in "(6) α-hydroxycarboxylic acid compound" of International Publication No. WO 2011/040530 can be applied to an embodiment of the present invention.

(3-6) Step of adding another additive(s)

In an embodiment of the present invention, an additive(s) other than the above described additives can be added in order to give various functions to the water-absorbing resin. Specifically, examples of such an additive(s) include surfactants, compounds having a phosphorus atom, oxidizers, organic reducing agents, water-insoluble inorganic fine particles, organic powder such as metallic soap, deodorants, antibacterial agents, pulp, thermoplastic fibers, and the like. Note that: as the surfactant, any of compounds disclosed in International Publication No. WO 2005/075070 is applicable to an embodiment of the present invention; and as the water-insoluble inorganic fine particles, any of compounds disclosed in "(5) Water-insoluble inorganic fine particles" of International Publication No. WO 2011/040530 is applied to an embodiment of the present invention.

The amount of the additive used (added) is determined as appropriate according to a purpose of the additive, and is therefore not limited to a particular one. The amount of the additive used (added) is preferably 3 parts by mass or less, more preferably 1 part by mass or less, relative to 100 parts by mass of the water-absorbing resin powder. It is also possible to add the additive during a step other than the above step.

(3-7) Other steps

In an embodiment of the present invention, in addition to the above described steps, it is possible to carry out a granulation step, a sizing step, a fine powder removal step, a fine powder recycling step, and/or the like according to need. Moreover, it is possible to further carry out one or more of a transportation step, a storing step, a packing step, a reserving step, and the like. Note that examples of the "sizing step" encompasses a fine powder removal step subsequent to the surface-crosslinking step and a step of carrying out classification and pulverization in a case where a water-absorbing resin is aggregated to have a size larger than an intended size. The "fine powder recycling step" encompasses an aspect in which fine powder itself is added as in an embodiment of the present invention, and also a step of adding the fine powder, in the form of a large hydrogel, during any of the steps for producing the water-absorbing resin.

The present invention encompasses the following aspects of the invention.

<1>An aspect of the present invention relates to a polymerization method for a water-absorbing resin in which an internal crosslinking agent and an aqueous monomer solution that contains an acrylic acid (salt) are essential and in which polymerization is carried out in the presence of the following i) and ii):

i) a polyacrylic acid (salt)-based polymer; and
ii) a fibrous material.

<2> The polymerization method according to the above <1>, wherein as the fibrous material, a fiber having a fiber length of 1 μm to 1000 μm is used in an amount of 0.01 parts by mass to 25 parts by mass relative to 100 parts by mass of monomers contained in the aqueous monomer solution.

<3> The polymerization method according to the above <1> or <2>, wherein the polyacrylic acid (salt)-based polymer is added in an amount of 1 part by mass to 150 parts by mass relative to 100 parts by mass of monomers contained in the aqueous monomer solution.

<4>The polymerization method according to any one of the above <1> to <3>, wherein a mass ratio of the polyacrylic acid (salt)-based polymer and the fibrous material is 99.9/0.1 to 80/20.

<5> The polymerization method according to any one of the above <1> to <4>, wherein the polyacrylic acid (salt)-based polymer contains a structural unit derived from an acrylic acid (salt)-based monomer in an amount of 80 mol% or more relative to a whole of structural units of the polymer.

<6> The polymerization method according to any one of the above <1> to <5>, wherein the fibrous material is at least one type selected from the group consisting of wood pulp fibers, artificial cellulose fibers, and synthetic polymer fibers.

<7> A method for producing a water-absorbing resin, the method including the polymerization method according to any one of the above <1> to <6> and a drying step for a hydrogel that is generated by the polymerization method.
<8> The method according to the above <7>, further including a crushing step for the hydrogel before the drying step.
<9> The method according to the above <7> or <8>, further including a surface-crosslinking step.
<10> A water-absorbing resin produced by the method according to any one of the above <7> to <9>.

The present invention is not limited to the embodiments, but can be altered by a skilled person in the art within the scope of the claims. The present invention also encompasses, in its technical scope, any embodiment derived by combining technical means disclosed in differing embodiments. Examples

The following description will discuss aspects of the present invention more concretely with reference to Examples and Comparative Examples below. However, aspects of the present invention are not limited to the description thereof and the present invention also encompasses in its scope any Example that is derived from an appropriate combination of technical means disclosed in different Examples.

Electric devices/apparatuses in Examples and Comparative Examples each used a 200-V or 100-V electric power supply, unless otherwise specified. Further, physical properties of a polymer and a water-absorbing resin of an embodiment of the present invention were measured at room temperature (20°C to 25°C) and at a relative humidity of 50% RH, unless otherwise specified.

[Measurement of physical properties]

The following will discuss measurement of physical properties related to a polymerization method for a water-absorbing resin in accordance with an embodiment of the present invention.

a) Solid content concentration
A solid content concentration of an aqueous polymer solution was determined by the following formula, from a residue m1 (g) which had been obtained by drying a sample m0 (g) for 3 hours at 180°C.

$$\text{Solid content concentration (mass\%)} = 100 \times m1/m0$$

b) Weight average molecular weight (Mw) of polymer

(Sample preparation)

Dilution was performed with a GPC solution (solvent described later: aqueous solution of 60 mM sodium dihydrogen phosphate dihydrate/20 mM disodium hydrogen phosphate dodecahydrate/400 ppm sodium azide) so that the concentration of a polymer component became 0.1 mass%, and then a resultant solution was caused to pass through a filter (manufactured by GL Sciences Inc., GL ChromatoDisk, aqueous 25A, pore diameter of 0.2 $\mu$m). A solution thus obtained was subjected to measurement under the following measurement conditions.

(GPC measurement conditions)

Measurement was carried out using ViscoTec TDA302 (registered Trademark). Regarding a configuration of an apparatus, that apparatus was equipped with a size exclusion chromatography, a refractive index detector, a light scattering detector and a capillary viscometer.

Measurement devices and measurement conditions were as follows.

Pump autosampler: ViscoTec GPCmax
Guard column: OHpak SB-G (manufactured by Showa Denko K.K.)
Column: Two columns OHpak SB-806MHQ (manufactured by Showa Denko K.K.) connected in series were used.
Detector: ViscoTec TDA302 (system internal temperature was kept at 30°C)
Solvent: aqueous solution of 60 mM dihydrogen phosphate dihydrate/20 mM disodium hydrogen phosphate dodecahydrate/400 ppm sodium azide (pH 6.35 to pH 6.38)
Flow rate: 0.5 mL/min
Injection volume: 100 $\mu$L

Pure water used for this measurement was water from which impurities had been sufficiently removed. The measurement was performed in a state in which a baseline of detection values was stable while a sufficient amount of the solvent was caused to flow in the device. In particular, the measurement was performed in the absence of a noise peak in the light scattering detector.

Device calibration was carried out using polyoxyethylene glycol (weight average molecular weight (Mw) 21966, molecular weight distribution (Mw/Mn = 1.0), differential refractive index (dn/dc) = 0.132, and solvent refractive index 1.33) as a standard sample.

c) Amount of residual monomers

The amount of residual monomers in an aqueous acrylic acid (salt) polymer solution sample was determined using high-performance liquid chromatography (HPLC). The amount of residual monomers refers to the amount of monomers dissolved in the aqueous solution relative to a polymer solid content in the solution sample.

d) Fiber length and mass ratio of fibrous material

An image of a fibrous material was captured with use of a scanning electron microscope (VF-9800, manufactured by Keyence Corporation) at a magnification of 50 times to 500 times. From the image captured, 50 fibers in the sample were randomly selected for measurement of each fiber length.
A mass ratio that was occupied by a component of fibers having a fiber length of 1 pm to 1000 pm relative to all of the 50 fibers selected, the fiber length was calculated by the following formula on the assumption that the fiber length was proportional to fiber weight (all widths of the fibers were equal to one other).

Mass ratio (mass%) of component of fibers having fiber length of 1 pm to 1000 pm = {(Total fiber length of component of fibers having fiber length of 1 pm to 1000 pm)/(Total fiber length of 50 fibers)} $\times$ 100

e) Induction period until start of polymerization

In the polymerization step of the water-absorbing resin, after an aqueous monomer solution etc. was mixed with an aqueous initiator solution, a time "after a mixed solution was poured into a vat-type container" until "the mixed solution started to swell and foam" was measured with use of a stopwatch. The time thus measured was defined as an "induction period until start of polymerization". The induction period was rounded off to the closest whole number.

f) Weight average particle diameter

The weight average particle diameter (D50) of the water-absorbing resin was measured in conformity with "(3) Mass-Average Particle Diameter (D50) described in columns 27 and 28 in U.S. Patent No. 7638570.

g) Fluid retention capacity without pressure (CRC)

In an embodiment of the present invention, fluid retention capacity without pressure (CRC) of the water-absorbing resin was measured in conformity with the EDANA method (ERT441.2-02).

h) Fluid retention capacity under pressure (absorption against pressure: AAP)

In an embodiment of the present invention, fluid retention capacity under pressure (absorption against pressure: AAP) of the water-absorbing resin was measured in conformity with the EDANA method (ERT442.2-02).

[Production Example 1]

(Production of aqueous polyacrylic acid salt solution)

A reaction liquid was prepared by dissolving 0.28 parts of 3-mercaptopropionic acid in 340 parts of a 36 mass% aqueous acrylic acid solution. Next, the reaction liquid was degassed in a nitrogen gas atmosphere for 30 minutes.
Next, to a stainless steel double arm kneader with a jacket which had two sigma-type blades with an openable lid, the above reaction liquid was fed, and a system was replaced with nitrogen gas while the reaction liquid was kept at 30°C. Then, 0.20 parts of sodium persulfate and 0.009 parts of L-ascorbic acid were added while the reaction liquid was being stirred. Approximately one minute later, polymerization started. The polymerization was carried out at 20°C to 97°C, and after 60 minutes from the start of the polymerization, an aqueous polymer solution was taken out. The aqueous polymer solution thus obtained was left to stand at 60°C for 16 hours for aging of polymerization. To the aqueous polymer solution thus aged, 400.0 g of ion-exchange water was added, so that the aqueous polymer solution was diluted. Thereafter, 100.6 g of a 48 mass% aqueous sodium hydroxide solution was added and a resultant polymer was neutralized, so that an aqueous polyacrylic acid salt solution (1) was obtained.

The aqueous polyacrylic acid salt solution (1) thus obtained had a solid content concentration of 35.1 mass%, a weight average molecular weight of 217,000, and an amount of residual monomers of 0.28 mass%.

[Production Example 2]

(Production of short-fiber pulp)

Pulp fibers were taken out from an absorbent body part of a commercially available disposable diaper ("Goon (registered trademark)" manufactured by Daio Paper Corporation), and the pulp fibers were crushed in a mortar. The pulp fibers crushed were sieved through a JIS standard sieve having a mesh size of 150 pm, and a material having passed through the sieve was collected. Short-fiber pulp (1) was thus obtained. The short-fiber pulp (1) thus obtained contained 83.6 mass% of pulp having a fiber length ranging from 1 pm to 1000 pm.

[Production Example 3]

(Production of polyacrylic acid salt/ short-fiber pulp mixture)

In a container, 100.0 g of the aqueous polyacrylic acid salt solution (1) obtained in Production Example 1 and 0.84 g of the short-fiber pulp (1) obtained in Production Example 2 were added and stirred and mixed with each other for 10 minutes with use of a homomixer. Thus, a polyacrylic acid salt/ short-fiber pulp mixture (1) in which the short-fiber pulp was dispersed in the aqueous polyacrylic acid salt solution was obtained. Note the short-fiber pulp (1) contained 0.70 g of pulp having a fiber length ranging from 1 pm to 1000 pm.

[Production Example 4]

(Production of polyacrylic acid salt/ short-fiber pulp mixture)

In a container, 78.0 g of the aqueous polyacrylic acid salt solution (1) obtained in Production Example 1, 3.94 g of the short-fiber pulp (1) obtained in Production Example 2, and 100.0 g of deionized water were added and stirred and mixed with one another for 10 minutes with use of a homomixer. Thus, a polyacrylic acid salt/ short-fiber pulp mixture (2) in which the short-fiber pulp was dispersed in the aqueous polyacrylic acid salt solution was obtained. Note that the short-fiber pulp (1) contained 3.29 g of pulp having a fiber length ranging from 1 pm to 1000 pm.

[Production Example 5]

(Production of polyacrylic acid salt/ short-fiber pulp mixture)

In a container, 156.1g of the aqueous polyacrylic acid salt solution (1) obtained in Production Example 1 and 0.66 g of the short-fiber pulp (1) obtained in Production Example 2 were added and stirred and mixed with each other for 10 minutes with use of a homomixer. Thus, a polyacrylic acid salt/ short-fiber pulp mixture (3) in which the short-fiber pulp was dispersed in the aqueous polyacrylic acid salt solution was obtained. Note that the short-fiber pulp (1) contained 0.55 g of pulp having a fiber length ranging from 1 pm to 1000 pm.

[Production Example 6]

(Production of short-fiber pulp dispersion)

In a container, 100.0 g of deionized water and 0.66 g of the short-fiber pulp (1) obtained in Production Example 2 were added. Then, a resultant mixture was stirred and mixed for 10 minutes with a homomixer. As a result, a short-fiber pulp dispersion (1) in which the short-fiber pulp was dispersed in deionized water was obtained. Note that the short-fiber pulp (1) contained 0.55 g of pulp having a fiber length ranging from 1 pm to 1000 pm.

[Production Example 7]

(Production of long-fiber pulp)

Pulp fibers were taken out from an absorbent body part of a commercially available disposable diaper ("Goon (registered trademark)" manufactured by Daio Paper Corporation). The pulp fibers taken out were sieved through a JIS standard sieve having a mesh size of 2 mm, and a material that has not passed through the sieve was collected. Long-fiber pulp (1) was thus obtained. The long-fiber pulp (1) thus obtained contained 93.7 mass% of pulp having a fiber length longer than 1000 pm.

[Production Example 8]

(Production of polyacrylic acid salt/long-fiber pulp mixture)

In a container, 78.1g of the aqueous polyacrylic acid salt solution (1) obtained in Production Example 1 and 0.54 g of the long-fiber pulp (1) obtained in Production Example 7 were added and stirred and mixed with each other for 10 minutes with use of a homomixer. Thus, a polyacrylic acid salt/long-fiber pulp mixture (1) in which the long-fiber pulp was dispersed in the aqueous polyacrylic acid salt solution was obtained. The long-fiber pulp (1) contained 0.51 g of pulp having a fiber length longer than 1000 pm.

[Example 1]

(Production of water-absorbing resin)

In a 2-liter polypropylene container, 389.5 g of acrylic acid, 0.99 g of polyethylene glycol diacrylate (molecular weight: 523) as an internal crosslinking agent, 129.7 g of a 48.5 mass% aqueous sodium hydroxide solution, and 300.0 g of deionized water were introduced and mixed with one another. As a result, an aqueous monomer solution (a') was prepared. The temperature of the aqueous monomer solution (a') was increased to 67.4°C by heat of neutralization at the first step immediately after preparation.

Next, the aqueous monomer solution (a') was cooled while being stirred. At a point in time at which the temperature of the aqueous monomer solution (a') reached 38°C, 195.7 g of a 48.5 mass% aqueous sodium hydroxide solution having a temperature adjusted to 40°C was added to the aqueous monomer solution (a') and mixed with each another, so that an aqueous monomer solution (a) was prepared. At this time, the temperature of the aqueous monomer solution (a) was increased to 82.9°C by heat of neutralization at the second step immediately after preparation. A precipitate was observed immediately after the start of the mixing of the 48.5 mass% aqueous sodium hydroxide solution, but was gradually dissolved. In this way, the aqueous monomer solution (a) became a transparent uniform solution.

Next, 78.7 g of the polyacrylic acid salt/short-fiber pulp mixture (1) having a temperature adjusted to 80°C was added to the aqueous monomer solution (a), and stirring was carried out for 30 seconds. A resultant polymerization concentration was 49.4 mass%.

Then, to a mixed solution of the above-described aqueous monomer solution (a) and the above-described polyacrylic acid salt/short-fiber pulp mixture (1), 16.5 g of a 4.0 mass% aqueous sodium persulfate solution was added while the mixed solution was being stirred. Subsequently, the mixed solution in which the aqueous sodium persulfate solution was added was immediately poured into a stainless steel vat-type vessel (with a bottom surface of 340 mm × 340 mm and a height of 25 mm; inner surface: Teflon (registered trademark) coating) in an atmospheric air open system. Note that pouring of the aqueous monomer solution (a) into the vat-type vessel commenced 55 seconds after the start of the second-stage neutralization. The vat-type vessel was heated with use of a hot plate (NEO HOTPLATE HI-1000; manufactured by Iuchi Seiei Do Ltd.) until a surface temperature reached 40°C. The "start of the second-stage neutralization" refers to the time point at which addition of 195.7 g of the 48.5 mass% aqueous sodium hydroxide solution having a temperature adjusted to 40°C to the aqueous monomer solution (a') was started.

A polymerization reaction started, 48 seconds after the aqueous monomer solution (a) was poured into the vat-type vessel. While water vapor was generated, a material being polymerized swelled and foamed in various directions and this polymerization reaction proceeded. Then, the material shrunk to a size slightly larger than the size of the vat-type vessel. After a 3-minute period from the start of the polymerization reaction, a crosslinked hydrogel polymer (hereafter referred to as "hydrogel") (1) was taken out. Note that a series of these operations was carried out in an atmospheric open system.

The hydrogel (1) obtained through the above polymerization reaction was subjected to gel-crushing with use of a meat chopper (HL-3225N; plate pore diameter: 10.0 mm; Remacom Co., Ltd.), so that the hydrogel (1) in a particulate form was obtained. The amount of residual monomers in the hydrogel (1) was measured and found to be 0.95 mass%.

The hydrogel (1) in a particulate form which had been prepared through the above operation was spread on a stainless-steel metal gauze having a mesh size of 850 pm, and was dried by letting through 180°C hot air for 30 minutes.

Subsequently, a resultant dried material was pulverized with use of a vibrating mill. Then, obtained was a water-absorbing resin precursor (1) which was ground to have an uneven shape with an weight average particle diameter of 411 pm and which had passed through a sieve of a mesh size of 850 pm but remained on a sieve of a mesh size of 106 pm.

A surface-crosslinking agent composition liquid consisting of 0.04 parts by mass of ethyleneglycoldiglycidyl ether, 0.9 parts by mass of propylene glycol, and 3 parts by mass of water was mixed in 100 parts by mass of the water-absorbing resin precursor (1) obtained. A mixture thus obtained was subjected to a heating treatment at 210°C for 40 minutes, so that a water-absorbing resin (1) whose color was white was obtained. The water-absorbing resin (1) had a weight average particle diameter of 403 pm, a CRC of 37.5 (g/g), and an AAP 0.3 of 28.8 (g/g).

[Comparative Example 1]

In a 2-liter polypropylene container, 410.0 g of acrylic acid, 1.04g of polyethylene glycol diacrylate (molecular weight: 523) as an internal crosslinking agent, 136.6 g of a 48.5 mass% aqueous sodium hydroxide solution, and 398.0 g of deionized water were introduced and mixed with one another. As a result, an aqueous monomer solution (b') was prepared. The temperature of the aqueous monomer solution (b') was increased to 62.0°C by heat of neutralization at the first step immediately after preparation.

Next, the aqueous monomer solution (b') was cooled while being stirred. At a point in time at which the temperature of the aqueous monomer solution (b') reached 38°C, 206.0 g of a 48.5 mass% aqueous sodium hydroxide solution having a temperature adjusted to 40°C was added to the aqueous monomer solution (b') and mixed with each other, so that an aqueous monomer solution (b) was prepared. At this time, the temperature of the aqueous monomer solution (b) was increased to 81.2°C by heat of neutralization at the second step immediately after preparation. A resultant polymerization concentration was 49.4 mass%. A precipitate was observed immediately after the start of the mixing of the 48.5 mass% aqueous sodium hydroxide solution, but was gradually dissolved. In this way, the aqueous monomer solution (b) became a transparent uniform solution.

Next, 17.3 g of a 4.0 mass% aqueous sodium persulfate solution was added to the aqueous monomer solution (b) while the aqueous monomer solution (b) was being stirred. Immediately after that, a resulting solution was poured in an atmospheric air open system into a stainless steel vat-type vessel. Note that pouring of the aqueous monomer solution (b) into the vat-type vessel commenced 55 seconds after the start of the second-stage neutralization. The vat-type vessel was heated with use of a hot plate until a surface temperature reached 40°C. The "start of the second-stage neutralization" refers to the time point at which addition of 206.0 g of the 48.5 mass% aqueous sodium hydroxide solution having a temperature adjusted to 40°C to the aqueous monomer solution (b') described above was started.

A polymerization reaction started, 62 seconds after the aqueous monomer solution (b) was poured into the vat-type vessel. While water vapor was generated, a material being polymerized swelled and foamed in various directions and this polymerization reaction proceeded. Then, the material shrunk to a size slightly larger than the size of the vat-type vessel. After a 3-minute period from the start of the polymerization reaction, a crosslinked hydrogel polymer (hereafter referred to as "hydrogel") (C1) was taken out. Note that a series of these operations was carried out in an atmospheric open system.

The hydrogel (C1) obtained through the above polymerization reaction was subjected to gel-crushing with use of a meat chopper, so that the hydrogel (C1) in a particulate form was obtained. The amount of residual monomers in the hydrogel (C1) was measured and found to be 1.31 mass%.

The hydrogel (C1) in a particulate form which had been prepared through the above operation was spread on a stainless-steel metal gauze having a mesh size of 850 pm, and was dried by letting through 180°C hot air for 30 minutes.

Subsequently, a resultant dried material was pulverized with use of a vibrating mill. Then, obtained was a water-absorbing resin precursor (C1) which was ground to have an uneven shape with an weight average particle diameter of 405 pm and which had passed through a sieve of a mesh size of 850 pm but remained on a sieve of a mesh size of 106 pm.

A surface-crosslinking agent composition liquid consisting of 0.04 parts by mass of ethyleneglycoldiglycidyl ether, 0.9 parts by mass of propylene glycol, and 3 parts by mass of water was mixed in 100 parts by mass of the water-absorbing resin precursor (C1) obtained.

A mixture thus obtained was subjected to a heating treatment at 210°C for 40 minutes, so that a water-absorbing resin (C1) whose color was white was obtained. The water-absorbing resin (C1) had a weight average particle diameter of 401 pm, a CRC of 37.2 (g/g), and an AAP 0.3 of 28.6 (g/g).

[Example 2]

(Production of water-absorbing resin)

In a 2-liter polypropylene container, 389.5 g of acrylic acid, 0.99 g of polyethylene glycol diacrylate (molecular weight: 523) as an internal crosslinking agent, 129.7 g of a 48.5 mass% aqueous sodium hydroxide solution, and 300.0 g of deionized water were introduced and mixed with one another. As a result, an aqueous monomer solution (c') was prepared. The temperature of the resultant aqueous monomer solution (c') was increased to 67.4°C by heat of neutralization at the first step immediately after preparation.

Next, the aqueous monomer solution (c') was cooled while being stirred. At a point in time at which the temperature of the aqueous monomer solution (c') reached 38°C, 195.7 g of a 48.5 mass% aqueous sodium hydroxide solution having a temperature adjusted to 40°C was added to the aqueous monomer solution (c') and mixed with each other, so that an aqueous monomer solution (c) was prepared. At this time, the temperature of the aqueous monomer solution (c) was increased to 82.9°C by heat of neutralization at the second step immediately after preparation. A precipitate was observed immediately after the start of the mixing of the 48.5 mass% aqueous sodium hydroxide solution, but was gradually dissolved. In this way, the aqueous monomer solution (c) became a transparent uniform solution.

Next, 181.9 g of a polyacrylic acid salt/ short-fiber pulp mixture (2) having a temperature adjusted to 80°C was added to the aqueous monomer solution (c), and stirring was carried out for 30 seconds. Then, to a mixed solution of the above-described aqueous monomer solution (c) and the above-described polyacrylic acid salt/short-fiber pulp mixture (2), 16.5 g of a 4.0 mass% aqueous sodium persulfate solution was added while the mixed solution was being stirred. Subsequently, the mixed solution in which the aqueous sodium persulfate solution was added was immediately poured into a stainless steel vat-type vessel (with a bottom surface of 340 mm × 340 mm and a height of 25 mm; inner surface: Teflon (registered trademark) coating) in an atmospheric air open system. Note that pouring of the aqueous monomer solution (c) into the vat-type vessel commenced 55 seconds after the start of the second-stage neutralization. The vat-type vessel was heated with use of a hot plate (NEO HOTPLATE HI-1000; manufactured by Iuchi Seiei Do Ltd.) until a surface temperature reached 40°C. The "start of the second-stage neutralization" refers to the time point at which addition of 195.7 g of the 48.5 mass% aqueous sodium hydroxide solution having a temperature adjusted to 40°C to the aqueous monomer solution (c') described above was started.

A polymerization reaction started, 46 seconds after the aqueous monomer solution (c) was poured into the vat-type vessel. While water vapor was generated, a material being polymerized swelled and foamed in various directions and this polymerization reaction proceeded. Then, the material shrunk to a size slightly larger than the size of the vat-type vessel. After a 3-minute period from the start of the polymerization reaction, a crosslinked hydrogel polymer (hereafter referred to as "hydrogel") (2) was taken out. Note that a series of these operations was carried out in an atmospheric open system.

The hydrogel (2) obtained through the above polymerization reaction was subjected to gel-crushing with use of a meat chopper (HL-3225N; plate pore diameter: 10.0 mm; Remacom Co., Ltd.), so that the hydrogel (2) in a particulate form was obtained. The amount of residual monomers in the hydrogel (2) was measured and found to be 0.87 mass%.

The hydrogel (2) in a particulate form which had been prepared through the above operation was spread on a stainless-steel metal gauze having a mesh size of 850 pm, and was dried by letting through 180°C hot air for 30 minutes.

Subsequently, a resultant dried material was pulverized with use of a vibrating mill. Then, obtained was a water-absorbing resin precursor (2) which was ground to have an uneven shape with an weight average particle diameter of 415 pm and which had passed through a sieve of a mesh size of 850 pm but remained on a sieve of a mesh size of 106 pm.

A surface-crosslinking agent composition liquid consisting of 0.04 parts by mass of ethyleneglycoldiglycidyl ether, 0.9 parts by mass of propylene glycol, and 3 parts by mass of water was mixed in 100 parts by mass of the water-absorbing resin precursor (2) obtained. A mixture thus obtained was subjected to a heating treatment at 210°C for 40 minutes, so that a water-absorbing resin (2) whose color was white was obtained. The water-absorbing resin (2) had a weight average particle diameter of 410 pm, a CRC of 37.4 (g/g), and an AAP 0.3 of 28.8 (g/g).

[Example 3]

(Production of water-absorbing resin)

In a 2-liter polypropylene container, 389.5 g of acrylic acid, 0.99 g of polyethylene glycol diacrylate (molecular weight: 523) as an internal crosslinking agent, 129.7 g of a 48.5 mass% aqueous sodium hydroxide solution, and 300.0 g of deionized water were introduced and mixed with one another. As a result, an aqueous monomer solution (d') was prepared. The temperature of the resultant aqueous monomer solution (d') was increased to 67.5°C by heat of neutralization at the first step immediately after preparation.

Next, the aqueous monomer solution (d') was cooled while being stirred. At a point in time at which the temperature of the aqueous monomer solution (d') reached 38°C, 195.7 g of a 48.5 mass% aqueous sodium hydroxide solution having a temperature adjusted to 40°C was added to the aqueous monomer solution (d') and mixed with each other, so that an aqueous monomer solution (d) was prepared. At this time, the temperature of the aqueous monomer solution (d) was increased to 83.1°C by heat of neutralization at the second step immediately after preparation. A precipitate was observed immediately after the start of the mixing of the 48.5 mass% aqueous sodium hydroxide solution, but was gradually dissolved. In this way, the aqueous monomer solution (d) became a transparent uniform solution.

Next, 156.8g of the polyacrylic acid salt/ short-fiber pulp mixture (3) having a temperature adjusted to 80°C was added to the aqueous monomer solution (d), and stirring was carried out for 30 seconds. Then, to a mixed solution of the above-described aqueous monomer solution (d) and the above-described polyacrylic acid salt/short-fiber pulp mixture (3), 16.5 g of a 4.0 mass% aqueous sodium persulfate solution was added while the mixed solution was being stirred. Subsequently, the mixed solution in which the aqueous sodium persulfate solution was added was immediately poured into a stainless steel vat-type vessel (with a bottom surface of 340 mm × 340 mm and a height of 25 mm; inner surface: Teflon (registered trademark) coating) in an atmospheric air open system. Note that pouring of the aqueous monomer solution (d) into the vat-type vessel commenced 55 seconds after the start of the second-stage neutralization. The vat-type vessel was heated with use of a hot plate (NEO HOTPLATE HI-1000; manufactured by Iuchi Seiei Do Ltd.) until a surface temperature reached 40°C. The "start of the second-stage neutralization" refers to the time point at which addition of 195.7 g of the 48.5 mass% aqueous sodium hydroxide solution having a temperature adjusted to 40°C to the aqueous monomer solution (d') described above was started.

A polymerization reaction started, 49 seconds after the aqueous monomer solution (d) was poured into the vat-type vessel. While water vapor was generated, a material being polymerized swelled and foamed in various directions and this polymerization reaction proceeded. Then, the material shrunk to a size slightly larger than the size of the vat-type vessel. After a 3-minute period from the start of the polymerization reaction, a crosslinked hydrogel polymer (hereafter referred to as "hydrogel") (3) was taken out. Note that a series of these operations was carried out in an atmospheric open system.

The hydrogel (3) obtained through the above polymerization reaction was subjected to gel-crushing with use of a meat chopper (HL-3225N; plate pore diameter: 10.0 mm; Remacom Co., Ltd.), so that the hydrogel (3) in a particulate form was obtained. The amount of residual monomers in the hydrogel (3) was measured and found to be 0.99 mass%.

The hydrogel (3) in a particulate form which had been prepared through the above operation was spread on a stainless-steel metal gauze having a mesh size of 850 pm, and was dried by letting through 180°C hot air for 30 minutes.

Subsequently, a resultant dried material was pulverized with use of a vibrating mill. Then, obtained was a water-absorbing resin precursor (3) which was ground to have an uneven shape with an weight average particle diameter of 400 pm and which had passed through a sieve of a mesh size of 850 pm but remained on a sieve of a mesh size of 106 pm.

A surface-crosslinking agent composition liquid consisting of 0.04 parts by mass of ethyleneglycoldiglycidyl ether, 0.9 parts by mass of propylene glycol, and 3 parts by mass of water was mixed in 100 parts by mass of the water-absorbing resin precursor (3) obtained. A mixture thus obtained was subjected to a heating treatment at 210°C for 40 minutes, so that a water-absorbing resin (3) whose color was white was obtained. The water-absorbing resin (3) had a weight average particle diameter of 398 pm, a CRC of 37.5 (g/g), and an AAP 0.3 of 28.6 (g/g).

[Comparative Example 2]

(Production of water-absorbing resin)

In a 2-liter polypropylene container, 389.5 g of acrylic acid, 0.99 g of polyethylene glycol diacrylate (molecular weight: 523) as an internal crosslinking agent, 129.7 g of a 48.5 mass% aqueous sodium hydroxide solution, and 300.0 g of deionized water were introduced and mixed with one another. As a result, an aqueous monomer solution (e') was prepared. The temperature of the resultant aqueous monomer solution (e') was increased to 67.2°C by heat of neutralization at the first step immediately after preparation.

Next, the aqueous monomer solution (e') was cooled while being stirred. At a point in time at which the temperature of the aqueous monomer solution (e') reached 38°C, 195.7 g of a 48.5 mass% aqueous sodium hydroxide solution having a temperature adjusted to 40°C was added to the aqueous monomer solution (e') and mixed with each other, so that an aqueous monomer solution (e) was prepared. At this time, the temperature of the aqueous monomer solution (e) was increased to 82.3°C by heat of neutralization at the second step immediately after preparation. A precipitate was observed immediately after the start of the mixing of the 48.5 mass% aqueous sodium hydroxide solution, but was gradually dissolved. In this way, the aqueous monomer solution (e) became a transparent uniform solution.

Next, 78.1g of the aqueous polyacrylic acid salt solution (1) having a temperature adjusted to 80°C was added to the aqueous monomer solution (e), and stirring was carried out for 30 seconds. Then, to a mixed solution of the above-described aqueous monomer solution (e) and the above-described aqueous polyacrylic acid salt solution (1), 16.5 g of a 4.0 mass% aqueous sodium persulfate solution was added while the mixed solution was being stirred. Subsequently, the mixed solution in which the aqueous sodium persulfate solution was added was immediately poured into a stainless steel vat-type vessel (with a bottom surface of 340 mm × 340 mm and a height of 25 mm; inner surface: Teflon (registered trademark) coating) in an atmospheric air open system. Note that pouring of the aqueous monomer solution (e) into the vat-type vessel commenced 55 seconds after the start of the second-stage neutralization. The vat-type vessel was heated with use of a hot plate (NEO HOTPLATE HI-1000; manufactured by Iuchi Seiei Do Ltd.) until a surface temperature reached 40°C. The "start of the second-stage neutralization" refers to the time point at which addition of 195.7 g of the 48.5 mass% aqueous sodium hydroxide solution having a temperature adjusted to 40°C to the aqueous monomer solution (e') described above was started.

A polymerization reaction started, 62 seconds after the aqueous monomer solution (e) was poured into the vat-type vessel. While water vapor was generated, a material being polymerized swelled and foamed in various directions and this polymerization reaction proceeded. Then, the material shrunk to a size slightly larger than the size of the vat-type vessel. After a 3-minute period from the start of the polymerization reaction, a crosslinked hydrogel polymer (hereafter referred to as "hydrogel") (C2) was taken out. Note that a series of these operations was carried out in an atmospheric open system.

The hydrogel (C2) obtained through the above polymerization reaction was subjected to gel-crushing with use of a meat chopper (HL-3225N; plate pore diameter: 10.0 mm; Remacom Co., Ltd.), so that the hydrogel (C2) in a particulate form was obtained. The amount of residual monomers in the hydrogel (C2) was measured and found to be 1.28 mass%.

The hydrogel (C2) in a particulate form which had been prepared through the above operation was spread on a stainless-steel metal gauze having a mesh size of 850 pm, and was dried by letting through 180°C hot air for 30 minutes.

Subsequently, a resultant dried material was pulverized with use of a vibrating mill. Then, obtained was a water-absorbing resin precursor (C2) which was ground to have an uneven shape with an weight average particle diameter of 409 pm and which had passed through a sieve of a mesh size of 850 pm but remained on a sieve of a mesh size of 106 pm.

A surface-crosslinking agent composition liquid consisting of 0.04 parts by mass of ethyleneglycoldiglycidyl ether, 0.9 parts by mass of propylene glycol, and 3 parts by mass of water was mixed in 100 parts by mass of the water-absorbing resin precursor (C2) obtained. A mixture thus obtained was subjected to a heating treatment at 210°C for 40 minutes, so that a water-absorbing resin (C2) whose color was white was obtained. The water-absorbing resin (C2) had a weight average particle diameter of 404 pm, a CRC of 37.2 (g/g), and an AAP 0.3 of 28.5 (g/g).

[Example 4]

(Production of water-absorbing resin)

In a 2-liter polypropylene container, 389.5 g of acrylic acid, 0.99 g of polyethylene glycol diacrylate (molecular weight: 523) as an internal crosslinking agent, 129.7 g of a 48.5 mass% aqueous sodium hydroxide solution, and 300.0 g of deionized water were introduced and mixed with one another. As a result, an aqueous monomer solution (f') was prepared. The temperature of the resultant aqueous monomer solution (f') was increased to 67.5°C by heat of neutralization at the first step immediately after preparation.

Next, the aqueous monomer solution (f') was cooled while being stirred. At a point in time at which the temperature of the aqueous monomer solution (f') reached 38°C, 195.7 g of a 48.5 mass% aqueous sodium hydroxide solution having a temperature adjusted to 40°C was added to the aqueous monomer solution (f') and mixed with each other, so that an aqueous monomer solution (f) was prepared. At this time, the temperature of the aqueous monomer solution (f) was increased to 82.6°C by heat of neutralization at the second step immediately after preparation. A precipitate was observed immediately after the start of the mixing of the 48.5 mass% aqueous sodium hydroxide solution, but was gradually dissolved. In this way, the aqueous monomer solution (f) became a transparent uniform solution.

Next, 78.6g of a polyacrylic acid salt/long-fiber pulp mixture (1) having a temperature adjusted to 80°C was added to the aqueous monomer solution (f), and stirring was carried out for 30 seconds. Then, to a mixed solution of the above-described aqueous monomer solution (f) and the above-described polyacrylic acid salt/long-fiber pulp mixture (1), 16.5 g of a 4.0 mass% aqueous sodium persulfate solution was added while the mixed solution was being stirred. Subsequently, the mixed solution in which the aqueous sodium persulfate solution was added was immediately poured into a stainless steel vat-type vessel (with a bottom surface of 340 mm × 340 mm and a height of 25 mm; inner surface: Teflon (registered trademark) coating) in an atmospheric air open system. Note that pouring of the aqueous monomer solution (f) into the vat-type vessel commenced 55 seconds after the start of the second-stage neutralization. The vat-type vessel was heated with use of a hot plate (NEO HOTPLATE HI-1000; manufactured by Iuchi Seiei Do Ltd.) until a surface temperature reached 40°C. The "start of the second-stage neutralization" refers to the time point at which addition of 195.7 g of the 48.5 mass% aqueous sodium hydroxide solution having a temperature adjusted to 40°C to the aqueous monomer solution (f') described above was started.

A polymerization reaction started, 59 seconds after the aqueous monomer solution (f) was poured into the vat-type vessel. While water vapor was generated, a material being polymerized swelled and foamed in various directions and this polymerization reaction proceeded. Then, the material shrunk to a size slightly larger than the size of the vat-type vessel. After a 3-minute period from the start of the polymerization reaction, a crosslinked hydrogel polymer (hereafter referred to as "hydrogel") (C3) was taken out. Note that a series of these operations was carried out in an atmospheric open system.

The hydrogel (C3) obtained through the above polymerization reaction was subjected to gel-crushing with use of a meat chopper (HL-3225N; plate pore diameter: 10.0 mm; Remacom Co., Ltd.), so that the hydrogel (C3) in a particulate form was obtained. The amount of residual monomers in the hydrogel (C3) was measured and found to be 1.33 mass%.

The hydrogel (C3) in a particulate form which had been prepared through the above operation was spread on a stainless-steel metal gauze having a mesh size of 850 pm, and was dried by letting through 180°C hot air for 30 minutes.

Subsequently, a resultant dried material was pulverized with use of a vibrating mill. Then, obtained was a water-absorbing resin precursor (C3) which was ground to have an uneven shape with an weight average particle diameter of 415 pm and which had passed through a sieve of a mesh size of 850 pm but remained on a sieve of a mesh size of 106 pm.

A surface-crosslinking agent composition liquid consisting of 0.04 parts by mass of ethyleneglycoldiglycidyl ether, 0.9 parts by mass of propylene glycol, and 3 parts by mass of water was mixed in 100 parts by mass of the water-absorbing resin precursor (C3) obtained. A mixture thus obtained was subjected to a heating treatment at 210°C for 40 minutes, so that a water-absorbing resin (C3) whose color was white was obtained. The water-absorbing resin (C3) had a weight average particle diameter of 408 pm, a CRC of 37.0 (g/g), and an AAP 0.3 of 28.5 (g/g).

Table 1 shows polymerization results in Examples and Comparative Examples, and physical properties of water-absorbing resins. obtained

[Table 1]

| | Polymerization | | | | | | Water-absorbing resin | | |
| --- | --- | --- | --- | --- | --- | --- | --- | --- | --- |
| | Composition ratio (mass ratio) | | | | Induction period (sec) | Residual monomer (mass%) | Weight average particle diameter ($\mu$m) | CRC (g/g) | AUL 0.3 (g/g) |
| | Monomer | Polymer | Short-fiber pulp *1 | Long-fiber pulp *2 | | | | | |
| Example 1 | 100 | 5 | 0.1 | - | 48 | 0.95 | 403 | 37.5 | 28.8 |
| Example 2 | 100 | 5 | 0.6 | - | 46 | 0.87 | 410 | 37.4 | 28.8 |
| Example 3 | 100 | 10 | 0.1 | - | 49 | 0.99 | 398 | 37.5 | 28.6 |
| Example 4 | 100 | 5 | - | 0.1 | 59 | 1.33 | 408 | 37.0 | 28.5 |
| Comparative Example 1 | 100 | - | - | - | 62 | 1.31 | 401 | 37.2 | 28.6 |
| Comparative Example 2 | 100 | 5 | - | - | 62 | 1.28 | 404 | 37.1 | 28.5 |
| *1: Pulp having a fiber length of 1 $\mu$m to 1000 $\mu$m
*2: Pulp having a fiber length of more than 1000 $\mu$m | | | | | | | | | |

It is clear from the results shown in Table 1 that each of Examples 1 to 4, in which polymerization was carried out by adding a mixture of a polyacrylic acid (salt)-based polymer and pulp fibers, had a shorter induction period and thus a faster polymerization speed than Comparative Examples 1 and 2, in which polymerization was carried out without adding the mixture of the polyacrylic acid (salt)-based polymer and the pulp fibers. In particular, each of Examples 1 to 3, in which a mixture of a polyacrylic acid (salt)-based polymer and short-fiber pulp was used, had a greater effect of improving the polymerization speed. In addition, an unexpected effect of reducing the amount of residual monomers in a hydrogel could be observed.

Also for water-absorbing properties of a water-absorbing resin obtained by performing the drying step, the crushing step, and the surface treatment step on a resultant hydrogel, each of Examples 1 to 3 had a slightly better water-absorbing properties than Comparative Examples 1 and 2.

The present invention is not limited to the embodiments, but can be altered by a skilled person in the art within the scope of the claims. The present invention also encompasses, in its technical scope, any embodiment derived by combining technical means disclosed in differing embodiments. Further, it is possible to form a new technical feature by combining the technical means disclosed in the respective embodiments.

**Claims**

1. A polymerization method for a water-absorbing resin in which an internal crosslinking agent and an aqueous monomer solution that contains an acrylic acid (salt) are essential and in which polymerization is carried out in the presence of the following i) and ii):

    i) a polyacrylic acid (salt)-based polymer; and
    ii) a fibrous material.

2. The polymerization method according to claim 1, wherein as the fibrous material, a fiber having a fiber length of 1 pm to 1000 pm is used in an amount of 0.01 parts by mass to 25 parts by mass relative to 100 parts by mass of monomers contained in the aqueous monomer solution.

3. The polymerization method according to claim 1 or 2, wherein the polyacrylic acid (salt)-based polymer is added in an amount of 1 part by mass to 150 parts by mass relative to 100 parts by mass of monomers contained in the aqueous monomer solution.

4. The polymerization method according to any one of claims 1 to 3, wherein a mass ratio of the polyacrylic acid (salt)-based polymer and the fibrous material is 99.9/0.1 to 80/20.

5. The polymerization method according to any one of claims 1 to 4, wherein the polyacrylic acid (salt)-based polymer contains a structural unit derived from an acrylic acid (salt)-based monomer in an amount of 80 mol% or more relative to a whole of structural units of the polymer.

6. The polymerization method according to any one of claims 1 to 5, wherein the fibrous material is at least one type selected from the group consisting of wood pulp fibers, artificial cellulose fibers, and synthetic polymer fibers.

7. A method for producing a water-absorbing resin, said method comprising said polymerization method according to any one of claims 1 to 6 and a drying step for a hydrogel that is generated by said polymerization method.

8. The method according to claim 7, further comprising a crushing step for the hydrogel before the drying step.

9. The method according to claim 7 or 8, further comprising a surface-crosslinking step.

10. A water-absorbing resin produced by said method according to any one of claims 7 to 9.

## INTERNATIONAL SEARCH REPORT

International application No.

**PCT/JP2023/003776**

### A. CLASSIFICATION OF SUBJECT MATTER

***C08F 220/06***(2006.01)i; ***C08F 2/44***(2006.01)i

FI: C08F220/06; C08F2/44 C

According to International Patent Classification (IPC) or to both national classification and IPC

### B. FIELDS SEARCHED

Minimum documentation searched (classification system followed by classification symbols)

C08F220/06; C08F2/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2-091129 A (NIPPON SHOKUBAI CO., LTD.) 30 March 1990 (1990-03-30) claims, examples, paragraph from p. 3, lower right column to p. 4, upper left column | 1, 3, 5-7, 10 |
| A | | 2, 4, 8, 9 |
| X | JP 62-053479 A (HAYASHIKANE ZOSEN KK) 09 March 1987 (1987-03-09) claims, examples, p. 3, upper left column | 1, 3, 5-7, 10 |
| A | | 2, 4, 8, 9 |
| X | JP 10-045812 A (SEKISUI PLASTICS CO LTD) 17 February 1998 (1998-02-17) claims, examples, paragraph [0013] | 1 ,2, 4-8, 10 |
| Y | | 9, 10 |
| A | | 3 |
| X | JP 63-178115 A (HAYASHIKANE ZOSEN KK) 22 July 1988 (1988-07-22) claims, examples | 1, 4-8, 10 |
| Y | | 9, 10 |
| A | | 2, 3 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 March 2023** | **20 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/003776**

**C.**     **DOCUMENTS CONSIDERED TO BE RELEVANT**

| Category* | Citation of document, with indication, where appropriate, of the relevant passages | Relevant to claim No. |
|---|---|---|
| Y | WO 2021/095806 A1 (NIPPON SHOKUBAI CO., LTD.) 20 May 2021 (2021-05-20) claims, examples | 9-10 |
| A | | 1-8 |
| A | WO 2012/023433 A1 (SUMITOMO SEIKA CHEMICALS CO., LTD.) 23 February 2012 (2012-02-23) claims, examples, paragraph [0057] | 1-10 |

Form PCT/ISA/210 (second sheet) (January 2015)

**INTERNATIONAL SEARCH REPORT**
Information on patent family members

International application No.

**PCT/JP2023/003776**

| Patent document cited in search report | | | Publication date (day/month/year) | Patent family member(s) | | | Publication date (day/month/year) |
|---|---|---|---|---|---|---|---|
| JP | 2-091129 | A | 30 March 1990 | (Family: none) | | | |
| JP | 62-053479 | A | 09 March 1987 | (Family: none) | | | |
| JP | 10-045812 | A | 17 February 1998 | (Family: none) | | | |
| JP | 63-178115 | A | 22 July 1988 | (Family: none) | | | |
| WO | 2021/095806 | A1 | 20 May 2021 | EP | 4059602 | A1 | |
| | | | | claims, examples | | | |
| | | | | CN | 114728265 | A | |
| WO | 2012/023433 | A1 | 23 February 2012 | US | 2013/0130017 | A1 | |
| | | | | claims, examples, paragraph [0058] | | | |
| | | | | EP | 2607383 | A1 | |
| | | | | CN | 103080140 | A | |
| | | | | KR | 10-2013-0099050 | A | |

Form PCT/ISA/210 (patent family annex) (January 2015)

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002212204 A
- US 4893999 A
- US 6241928 B
- US 2005215734
- US 6987151 B
- US 6710141 B
- US 20080161512
- WO 2009123197 A
- US 20080194863
- US 20050215734
- US 7265190 B
- WO 2011126079 A
- WO 2006100300 A
- WO 2011025012 A
- WO 2011025013 A
- WO 2011111657 A
- US 7638570 B
- US 7183456 B
- WO 2011040530 A
- WO 2005075070 A